# EUROPÄISCHE PATENTANMELDUNG

(11) **EP 4 516 684 A1**
(43) Veröffentlichungstag der Anmeldung: **05.03.2025**
(21) Anmeldenummer: 24187775.2
(22) Anmeldetag: 10.07.2024
(51) Int. Cl.: B65B 11/10, B65B 21/24

(54) **VORRICHTUNG UND VERFAHREN ZUM AUFBRINGEN VON VERPACKUNGSFOLIE AUF ARTIKELGRUPPEN**

(30) Priorität: 17.08.2023 DE 102023122016
(71) Anmelder: Krones Aktiengesellschaft, 93073 Neutraubling (DE)
(72) Erfinder: HAIDACHER, Peter, 93073 Neutraubling (DE); KOCH, Peter, 93073 Neutraubling (DE); KOCHINKE, Florian, 93073 Neutraubling (DE); SPINDLER, Herbert, 93073 Neutraubling (DE); WERNER, Jürgen, 93073 Neutraubling (DE)
(74) Vertreter: Benninger, Johannes

(57) **Zusammenfassung**

Es ist eine Vorrichtung (1) zum Aufbringen von Verpackungsfolie auf Artikelgruppen (12) offenbart. Die Vorrichtung (1) umfasst eine Horizontalfördereinrichtung (5) zum Transport von Artikelgruppen (12) sowie eine Zuführeinrichtung, welche zum Einbringen von Zuschnitten aus Verpackungsfolie (14) in einen Transportweg der über die mindestens eine Horizontalfördereinrichtung (5) transportierten Artikelgruppen (12) ausgebildet ist. Weiter sind mehrere Einschlagstäbe (30) vorgesehen, die derart umlaufend bewegt sind, dass sie einen jeweiligen frei verbleibenden Abschnitt (17) des jeweiligen Zuschnittes aus Verpackungsfolie (14) aufnehmen und um die jeweilige Artikelgruppe (12) führen. Es ist eine Strömungserzeugungseinrichtung (40) vorgesehen, die zur Erzeugung mindestens eines Luftvolumenstromes ausgebildet ist, über den ein jeweiliger frei verbleibender und hierbei bereits von einem jeweiligen Einschlagstab (30) aufgenommener Abschnitt (17) des jeweiligen Zuschnittes aus Verpackungsfolie (14) zur jeweiligen Artikelgruppe (12) geblasen werden kann.

## Beschreibung

Die vorliegende Erfindung betrifft eine Vorrichtung und ein Verfahren zum Aufbringen von Verpackungsfolie auf Artikelgruppen.

Bei der Verpackung von Artikeln wie etwa Behältern zu Gebinden werden die Artikel oftmals zu mehreren gruppiert und in dieser gruppierten Anordnung mit Folie umhüllt, wonach die Folie an Überlappungsstellen und/oder an den Artikeln fixiert und/oder durch Wärmeeinwirkung um die Artikel geschrumpft werden kann, um für einen festen mechanischen Zusammenhalt der solcherart zu einem Gebinde zusammengefassten Artikel zu sorgen. Diese Gebinde, die beispielsweise durch vier oder sechs mit Schrumpffolie umhüllte und solchermaßen mechanisch stabilisierte Getränkebehälter gebildet sein können, sind stapel- und/oder palettierbar und können zudem als fertige Verkaufseinheiten dienen, die dem Verbraucher in dieser leicht handhabbaren Form zur Verfügung gestellt werden können.

Um aus Artikeln Gebinde herstellen zu können, werden zunächst Artikelgruppen gebildet, die mehrere für ein jeweiliges Gebinde vorgesehene Artikel umfassen. Um eine Artikelgruppe hierauf mit Folie umhüllen zu können, werden aus der Folie hergestellte Zuschnitte in den Transportweg der Artikelgruppen eingebracht, so dass eine jeweilige Artikelgruppe während einer fortlaufenden Bewegung auf einen jeweiligen Zuschnitt auffährt. Über Einschlagstäbe, die umlaufend bewegt werden, wird der jeweilige Zuschnitt sodann um die jeweilige Artikelgruppe geführt, woraufhin die Artikelgruppe zusammen mit dem jeweiligen Zuschnitt in einen Schrumpftunnel gelangt. Dort wird der jeweilige Zuschnitt auf die jeweilige Artikelgruppe aufgeschrumpft.

Eine solche Vorrichtung ist beispielsweise aus der DE 10 2017 114 024 A1 bereits bekannt. Die in der DE-Schrift offenbarte Vorrichtung umfasst eine Folieneinschlagvorrichtung, welche Artikelgruppen mit einem Folienabschnitt definierter Länge umhüllst. Die Folieneinschlagvorrichtung umfasst mehrere Einschlagstäbe sowie eine Leiteinrichtung für die mehreren Einschlagstäbe.

Wird ein Zuschnitt derart auf eine jeweilige Artikelgruppe aufgebracht, so müssen aufeinanderfolgende Artikelgruppen bis dato einen relativ großen Abstand in Transportrichtung zueinander besitzen, damit verhindert werden kann, dass aufeinanderfolgende Artikelgruppen auf denselben Zuschnitt aus Verpackungsfolie auffahren. Ein hoher relativer Abstand aufeinanderfolgender Artikelgruppen zueinander führt zu einem verminderten Durchsatz der Vorrichtung bei einer entsprechenden Verpackung von Artikelgruppen mit einem jeweiligen Zuschnitt aus Verpackungsfolie. Zudem besitzen Vorrichtungen einen großen bzw. umfangreichen Aufbau, da eine zum Transport einer Vielzahl an Artikelgruppen vorgesehen Horizontalfördereinrichtung eine große Erstreckung besitzen muss, um eine Vielzahl an Artikelgruppen, die eine große relative Beabstandung zueinander besitzen, aufnehmen zu können.

Eine Aufgabe der Erfindung kann aus diesem Grunde darin gesehen werden, eine Vorrichtung zum Aufbringen von Verpackungsfolie auf Artikelgruppen bereitzustellen, die mit hohem Durchsatz arbeiten kann und zudem einen kompakten Aufbau besitzt. Weiter kann eine Aufgabe der Erfindung darin gesehen werden, ein entsprechendes Verfahren bereitzustellen, mit welchem auf Artikelgruppen Verpackungsfolie mit hohem Durchsatz aufgebracht werden kann, wobei hierzu ein reduzierter Platzbedarf erforderlich ist.

Die obig genannten Aufgaben werden mit den Gegenständen gelöst, welche die Merkmale in den unabhängigen Ansprüchen umfassen. Vorteilhafte Ausführungsformen werden in den abhängigen Ansprüchen beschrieben.

Die Erfindung betrifft eine Vorrichtung zum Aufbringen von Verpackungsfolie auf Artikelgruppen. Eine Artikelgruppe kann hierbei aus wenigstens zwei Artikeln gebildet sein. Beispielsweise kann es sein, dass eine jeweilige Artikelgruppe genau vier Artikel, genau sechs Artikel oder genau acht Artikel umfasst.

Eine Artikelgruppe kann als Getränkebehältergruppe ausgebildet sein. Hierbei kann es sein, dass eine Getränkebehältergruppe aus wenigstens zwei Getränkebehältern gebildet ist. Beispielsweise kann es sein, dass eine jeweilige Getränkebehältergruppe genau vier Getränkebehälter, genau sechs Getränkebehälter oder genau acht Getränkebehälter umfasst. Ein jeweiliger Getränkebehälter kann hierbei als Getränkeflasche oder als Getränkedose ausgebildet sein.

Die Vorrichtung umfasst mindestens eine Horizontalfördereinrichtung zum Transport von Artikelgruppen. Die mindestens eine Horizontalfördereinrichtung kann mit einer Steuereinrichtung in Verbindung stehen, welche derart ausgebildet ist, dass sie die mindestens eine Horizontalfördereinrichtung zur kontinuierlichen bzw. zur unterbrechungsfreien Fortbewegung der Artikelgruppen ansteuert.

Weiter umfasst die Vorrichtung eine Zuführeinrichtung, welche zum Einbringen von Zuschnitten aus Verpackungsfolie in einen Transportweg der über die mindestens eine Horizontalfördereinrichtung transportierten Artikelgruppen ausgebildet ist, so dass eine jeweilige Artikelgruppe auf einen Abschnitt eines jeweiligen in den Transportweg eingebrachten Zuschnittes aus Verpackungsfolie auffährt und ein weiterer Abschnitt des jeweiligen Zuschnittes aus Verpackungsfolie frei verbleibt. Die Zuführeinrichtung kann sich im Betrieb der Vorrichtung unterhalb der mindestens einen Horizontalfördereinrichtung befinden.

In diversen Ausführungsformen kann die Vorrichtung eine Trenn- und/oder Schneidstation umfassen, über welche Zuschnitte aus Verpackungsfolie aus einem Endlosstrang aus Verpackungsfolie abtrennbar und in Richtung der Zuführeinrichtung transportierbar sind.

Auch besitzt die Vorrichtung mehrere Einschlagstäbe, die derart umlaufend bewegt sind, dass sie einen jeweiligen frei verbleibenden Abschnitt des jeweiligen Zuschnittes aus Verpackungsfolie aufnehmen und um die jeweilige Artikelgruppe führen. Es kann hierbei sein, dass die Vorrichtung mindestens zwei parallel zueinander orientierte und jeweils umlaufend bewegte Ketten- und/oder Riemen umfasst, wobei ein jeweiliger Einschlagstab an den mindestens zwei parallel zueinander orientierten Ketten- und/oder Riemen angeordnet ist und mittels der mindestens zwei parallel zueinander orientierten Ketten- und/oder Riemen umlaufend bewegt wird. Es kann sein, dass die mehreren Einschlagstäbe kontinuierlich umlaufend bewegt sind bzw. dass die mehreren Einschlagstäbe zu keinem Zeitpunkt stillstehen.

Die Vorrichtung umfasst eine Strömungserzeugungseinrichtung, welche zur Erzeugung mindestens eines Luftvolumenstroms ausgebildet ist bzw. welche zur Erzeugung mindestens eines Luftvolumenstroms konfiguriert, ausgestattet und/oder angeordnet ist, über den ein jeweiliger frei verbleibender und hierbei bereits von einem jeweiligen Einschlagstab aufgenommener Abschnitt des jeweiligen Zuschnittes aus Verpackungsfolie zur jeweiligen Artikelgruppe geblasen werden kann. Insbesondere kann es sein, dass die Vorrichtung eine Strömungserzeugungseinrichtung umfasst, welche zur Erzeugung mindestens eines Luftvolumenstromes ausgebildet ist bzw. welche zur Erzeugung mindestens eines Luftvolumenstroms konfiguriert, ausgestattet und/oder angeordnet ist, über den ein jeweiliger frei verbleibender und hierbei bereits von einem jeweiligen Einschlagstab aufgenommener Abschnitt des jeweiligen Zuschnittes aus Verpackungsfolie derart zur jeweiligen Artikelgruppe geblasen werden kann, dass der jeweilige frei verbleibende und hierbei bereits von einem jeweiligen Einschlagstab aufgenommene Abschnitt des jeweiligen Zuschnittes aus Verpackungsfolie hierdurch zumindest bereichsweise mit der jeweiligen Artikelgruppe in Oberflächenkontakt gelangt.

Alternativ oder ergänzend hierzu kann es sein, dass die Vorrichtung eine Strömungserzeugungseinrichtung umfasst, welche zur Erzeugung mindestens eines Luftvolumenstroms ausgebildet ist bzw. welche zur Erzeugung mindestens eines Luftvolumenstroms konfiguriert, ausgestattet und/oder angeordnet ist, über den ein jeweiliger frei verbleibender und hierbei bereits von einem jeweiligen Einschlagstab aufgenommener Abschnitt des jeweiligen Zuschnittes aus Verpackungsfolie zur jeweiligen Artikelgruppe geblasen werden kann, so dass der jeweilige Zuschnitt aus Verpackungsfolie hierdurch zumindest bereichsweise aus einem Spalt gezogen wird, welcher Spalt zwischen einer ersten Transporteinrichtung und einer zweiten Transporteinrichtung der mindestens einen Horizontalfördereinrichtung ausgebildet und zum Einbringen von Zuschnitten aus Verpackungsfolie über die Zuführeinrichtung vorgesehen ist.

Indem der Zuschnitt aus Verpackungsfolie zur jeweiligen Artikelgruppe geblasen wird, lässt sich eine Reichweite des jeweiligen Zuschnittes aus Verpackungsfolie in Richtung einer jeweiligen nachfolgenden Artikelgruppe verkürzen. Hierdurch können aufeinanderfolgende Artikelgruppen mit geringem relativem Abstand zueinander entlang der mindestens einen Horizontalfördereinrichtung bewegt werden, ohne dass aufeinanderfolgende Artikelgruppen ungewollt auf denselben Zuschnitt aus Verpackungsfolie auffahren. Da somit mehrere Artikelgruppen mittels der mindestens einen Horizontalfördereinrichtung innerhalb einer gewissen Zeit transportiert werden können, besitzt die Vorrichtung einen hohen Durchsatz beim Aufbringen von Verpackungsfolie auf Artikelgruppen. Auch reichen sehr kurze Strecken aus, um mittels der mindestens einen Horizontalfördereinrichtung eine Vielzahl an Artikelgruppen gemeinsam bewegen zu können. Die Vorrichtung zeichnet sich somit auch durch einen sehr kompakten Aufbau aus.

Bewährt haben sich Ausführungsformen, bei denen die mindestens eine Horizontalfördereinrichtung eine erste Transporteinrichtung und eine zweite Transporteinrichtung umfasst, wobei die zweite Transporteinrichtung entlang einer Transportrichtung der Artikelgruppen auf die erste Transporteinrichtung folgt. Hierbei kann zwischen der ersten Transporteinrichtung und der zweiten Transporteinrichtung ein Spalt ausgebildet sein, über welchen mittels der Zuführeinrichtung Zuschnitte aus Verpackungsfolie in den Transportweg der Artikelgruppen einbringbar sind. Die erste Transporteinrichtung und/oder die zweite Transporteinrichtung können jeweils ein umlaufend angetriebenes Fördermittel für Artikelgruppen umfassen. Bei dem umlaufend angetriebenen Fördermittel kann es sich beispielsweise um ein umlaufend angetriebenes Transportband oder um eine umlaufend angetriebene Mattenkette handeln. Auch kann es hierbei sein, dass die Strömungserzeugungseinrichtung wenigstens eine Düse besitzt, über die mindestens ein Luftvolumenstrom derart abgebbar ist, dass der mindestens eine Luftvolumenstrom mit seiner Hauptströmungsrichtung auf einen im Bereich des Spaltes angeordneten Endbereich der zweiten Transporteinrichtung gerichtet ist. Die Praxis hat gezeigt, dass sich bei solchen Ausführungsformen der mindestens eine Luftvolumenstrom entlang des umlaufend angetriebenen Fördermittels bewegt, wodurch der jeweilige frei verbleibende Abschnitt des jeweiligen Zuschnittes an Verpackungsfolie angehoben wird und problemlos in Richtung der jeweiligen Artikelgruppe geblasen werden kann.

Insbesondere kann es sein, dass die zweite Transporteinrichtung in ihrem Endbereich eine Umlenkung mit einer im Wesentlichen zylindrischen Form besitzt, wobei das umlaufend angetriebene Fördermittel nach Passieren der Umlenkung das Lasttrum bzw. das Zugtrum der zweiten Transporteinrichtung ausbildet. Es kann hierbei sein, dass über die wenigstens eine Düse der Strömungserzeugungseinrichtung der mindestens eine Luftvolumenstrom derart abgebbar ist, dass der mindestens eine Luftvolumenstrom mit seiner Hauptströmungsrichtung auf die Umlenkung gerichtet ist. Mit solchen Ausführungsformen lässt sich der vorhergehend bereits genannte technische Effekt, wonach sich der mindestens eine Luftvolumenstrom entlang des umlaufend angetriebenen Fördermittels bewegt und hierbei den jeweiligen frei verbleibenden Abschnitt anhebt, weiter verbessern.

Wie vorhergehend bereits erwähnt, kann es sein, dass die mindestens eine Horizontalfördereinrichtung eine erste Transporteinrichtung und eine zweite Transporteinrichtung umfasst, wobei die zweite Transporteinrichtung entlang einer Transportrichtung der Artikelgruppen auf die erste Transporteinrichtung folgt und wobei zwischen der ersten Transporteinrichtung und der zweiten Transporteinrichtung ein Spalt ausgebildet ist, über welchen mittels der Zuführeinrichtung Zuschnitte aus Verpackungsfolie in den Transportweg der Artikelgruppen einbringbar sind.

Bei solchen Ausführungsformen kann es sein, dass die Strömungserzeugungseinrichtung mindestens eine erste Düse und mindestens eine zweite Düse besitzt, über die jeweils mindestens ein Luftvolumenstrom derart abgebbar ist, dass der jeweilige mindestens eine Luftvolumenstrom mit seiner jeweiligen Hauptströmungsrichtung auf einen im Bereich des Spaltes angeordneten Endbereich der zweiten Transporteinrichtung gerichtet ist. Weiter kann es hierbei sein, dass der über die mindestens eine erste Düse abgegebene mindestens eine Luftvolumenstrom auf eine erste Breitseitenfläche des frei verbleibenden und hierbei bereits von einem jeweiligen Einschlagstab aufgenommenen Abschnittes des jeweiligen Zuschnittes aus Verpackungsfolie trifft und der über die mindestens eine zweite Düse abgegebene Luftvolumenstrom auf eine zweite Breitseitenfläche des frei verbleibenden und hierbei bereits von einem jeweiligen Einschlagstab aufgenommenen Abschnittes des jeweiligen Zuschnittes aus Verpackungsfolie trifft, welche zweite Breitseitenfläche der ersten Breitseitenfläche gegenüberliegt.

Wie es vorhergehend bereits erwähnt wurde, kann es sein, dass die zweite Transporteinrichtung in ihrem Endbereich eine Umlenkung mit einer im Wesentlichen zylindrischen Form besitzt, wobei das umlaufend angetriebene Fördermittel nach Passieren der Umlenkung das Lasttrum bzw. das Zugtrum der zweiten Transporteinrichtung ausbildet. Es kann hierbei sein, dass der über die mindestens eine erste Düse abgegebene mindestens eine Luftvolumenstrom und der über die mindestens eine zweite Düse abgegebene Luftvolumenstrom mit ihrer jeweiligen Hauptströmungsrichtung auf die Umlenkung gerichtet sind.

Die mindestens eine erste Düse und die mindestens eine zweite Düse können unterhalb einer über die mindestens eine Horizontalfördereinrichtung ausgebildeten Transportebene angeordnet sein.

Weiter kann es sein, dass die Strömungserzeugungseinrichtung ein erstes Rohr umfasst, über das die mindestens eine erste Düse ausgebildet ist. Alternativ oder ergänzend hierzu kann es sein, dass die Strömungserzeugungseinrichtung ein zweites Rohr umfasst, welches die mindestens eine zweite Düse ausbildet.

Die Strömungserzeugungseinrichtung kann wenigstens ein Strömungsleitblech umfassen, welches derart angeordnet ist, dass der über die mindestens eine erste Düse abgegebene Luftvolumenstrom über das wenigstens eine Strömungsleitblech umgelenkt wird, so dass der über die mindestens eine erste Düse abgegebene Luftvolumenstrom mit seiner Hauptströmungsrichtung auf den im Bereich des Spaltes angeordneten Endbereich der zweiten Transporteinrichtung gerichtet ist und auf die zweite Breitseitenfläche des frei verbleibenden und hierbei bereits von einem jeweiligen Einschlagstab aufgenommenen Abschnittes des jeweiligen Zuschnittes aus Verpackungsfolie trifft.

Die Zuführeinrichtung kann eine Lenkungseinrichtung zur Führung von Zuschnitten aus Verpackungsfolie umfassen, welche Lenkungseinrichtung eine zumindest abschnittsweise gewölbte und mit Strömungsluft überstrichene Oberfläche ausbildet und entlang welcher Lenkungseinrichtung ein jeweiliger Zuschnitt aus Verpackungsfolie bewegt wird, bevor er die Strömungserzeugungseinrichtung erreicht.

Die Vorrichtung kann eine Steuereinrichtung umfassen, über welche die Strömungserzeugungseinrichtung zum intermittierenden Erzeugen des mindestens einen Luftvolumenstromes ansteuerbar ist.

Die Erfindung betrifft zudem die Verwendung einer Vorrichtung gemäß einem Ausführungsbeispiel der vorhergehenden Beschreibung zum Aufbringen von Verpackungsfolie auf Artikelgruppen, bei welcher Verpackungsfolie es sich um eine thermoplastische Verpackungsfolie handelt.

Weiter betrifft die Erfindung ein Verfahren zum Aufbringen von Verpackungsfolie auf Artikelgruppen, bei welchem Verfahren Artikelgruppen über mindestens eine Horizontalfördereinrichtung bewegt werden und eine Zuführeinrichtung Zuschnitte aus Verpackungsfolie in einen Transportweg der Artikelgruppen einbringt, so dass eine jeweilige Artikelgruppe auf einen Abschnitt eines jeweiligen in den Transportweg eingebrachten Zuschnittes aus Verpackungsfolie auffährt und ein weiterer Abschnitt des jeweiligen Zuschnittes aus Verpackungsfolie frei verbleibt. Die vorhergehend bereits beschriebene Vorrichtung kann zur Durchführung der nachfolgend beschriebenen Ausführungsformen des erfindungsgemäßen Verfahrens ausgebildet sein.

Bei dem Verfahren sind mehrere Einschlagstäbe vorgesehen, von denen ein jeweiliger Einschlagstab einen jeweiligen frei verbleibenden Abschnitt eines jeweiligen Zuschnittes aus Verpackungsfolie entgegennimmt und um die jeweilige Artikelgruppe führt. Bei dem Verfahren ist vorgesehen, dass ein jeweiliger frei verbleibender und hierbei bereits von einem jeweiligen Einschlagstab aufgenommener Abschnitt des jeweiligen Zuschnittes aus Verpackungsfolie mittels mindestens eines durch die Strömungserzeugungseinrichtung bereitgestellten Luftvolumenstromes zur jeweiligen Artikelgruppe geblasen wird.

Die mindestens eine Horizontalfördereinrichtung kann eine erste Transporteinrichtung und eine zweite Transporteinrichtung besitzen, wobei die zweite Transporteinrichtung entlang einer Transportrichtung der Artikelgruppen auf die erste Transporteinrichtung folgt und wobei zwischen der ersten Transporteinrichtung und der zweiten Transporteinrichtung ein Spalt ausgebildet ist, über den mittels der Zuführeinrichtung Zuschnitte aus Verpackungsfolie in den Transportweg der Artikelgruppen eingebracht werden. Weiter kann über wenigstens eine Düse der Strömungserzeugungseinrichtung mindestens ein Luftvolumenstrom derart abgegeben werden, dass der mindestens eine Luftvolumenstrom mit seiner Hauptströmungsrichtung auf einen im Bereich des Spaltes angeordneten Endbereich der zweiten Transporteinrichtung gerichtet wird.

Wie vorhergehend bereits erwähnt, kann es sein, dass die mindestens eine Horizontalfördereinrichtung eine erste Transporteinrichtung und eine zweite Transporteinrichtung besitzt, wobei die zweite Transporteinrichtung entlang einer Transportrichtung der Artikelgruppen auf die erste Transporteinrichtung folgt und wobei zwischen der ersten Transporteinrichtung und der zweiten Transporteinrichtung ein Spalt ausgebildet ist, über den mittels der Zuführeinrichtung Zuschnitte aus Verpackungsfolie in den Transportweg der Artikelgruppen eingebracht werden. Hierbei kann es sein, dass die Strömungserzeugungseinrichtung mindestens eine erste Düse und mindestens eine zweite Düse besitzt, über die jeweils mindestens ein Luftvolumenstrom derart abgegeben wird, dass der jeweilige mindestens eine Luftvolumenstrom mit seiner jeweiligen Hauptströmungsrichtung auf einen im Bereich des Spaltes angeordneten Endbereich der zweiten Transporteinrichtung gerichtet wird.

Weiter kann es hierbei sein, dass der über die mindestens eine erste Düse abgegebene mindestens eine Luftvolumenstrom auf eine erste Breitseitenfläche des frei verbleibenden und hierbei bereits von einem jeweiligen Einschlagstab aufgenommenen Abschnittes des jeweiligen Zuschnittes aus Verpackungsfolie trifft und dass der über die mindestens eine zweite Düse abgegebene Luftvolumenstrom auf eine zweite Breitseitenfläche des frei verbleibenden und hierbei bereits von einem jeweiligen Einschlagstab aufgenommenen Abschnittes des jeweiligen Zuschnittes aus Verpackungsfolie trifft, welche zweite Breitseitenfläche der ersten Breitseitenfläche gegenüberliegt.

Weiter kann es sein, dass die Strömungserzeugungseinrichtung wenigstens ein Strömungsleitblech besitzt, über das der über die mindestens eine erste Düse abgegebene Luftvolumenstrom umgelenkt wird, so dass der über die mindestens eine erste Düse abgegebene Luftvolumenstrom mit seiner Hauptströmungsrichtung auf den im Bereich des Spaltes angeordneten Endbereich der zweiten Transporteinrichtung gerichtet ist und auf die zweite Breitseitenfläche des frei verbleibenden und hierbei bereits von einem jeweiligen Einschlagstab aufgenommenen Abschnittes des jeweiligen Zuschnittes aus Verpackungsfolie trifft.

In diversen Ausführungsformen kann es zudem sein, dass die Zuführeinrichtung eine Lenkungseinrichtung zur Führung von Zuschnitten aus Verpackungsfolie umfasst, welche Lenkungseinrichtung eine zumindest abschnittsweise gewölbte und mit Strömungsluft überstrichene Oberfläche ausbildet und entlang welcher Lenkungseinrichtung sich ein jeweiliger Zuschnitt aus Verpackungsfolie bewegt, bevor er die Strömungserzeugungseinrichtung erreicht.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Ansicht einer bereits aus dem Stand der Technik bekannten Vorrichtung und eines bereits aus dem Stand der Technik bekannten Verfahrens;

Fig. 2 zeigt eine schematische Ansicht einer Ausführungsform einer erfindungsgemäßen Vorrichtung und verdeutlicht Schritte, wie sie in diversen Ausführungsformen des erfindungsgemäßen Verfahrens vorgesehen sein können;

Fig. 3 zeigt eine perspektivische Ansicht einer weiteren Ausführungsform einer erfindungsgemäßen Vorrichtung und verdeutlicht Schritte, wie sie in weiteren Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

An dieser Stelle sei ergänzend betont, dass Merkmale, welche vorhergehend zu Ausführungsform der erfindungsgemäßen Vorrichtung beschrieben wurden, gleichermaßen Teilaspekte des erfindungsgemäßen Verfahrens betreffen oder sein können. Wenn daher an einer Stelle bei der Beschreibung oder auch bei den Anspruchsdefinitionen von einer Ausführungsform der erfindungsgemäßen Vorrichtung die Rede ist, so gilt dies gleichermaßen für die Ausführungsformen des erfindungsgemäßen Verfahrens. In umgekehrter Weise gilt dasselbe, so dass auch alle Aspekte und Ausführungsvarianten, die im Zusammenhang mit Ausführungsformen des erfindungsgemäßen Verfahrens erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zur erfindungsgemäßen Vorrichtung von bestimmten Vorteilen und Wirkungen die Rede ist, so gilt dies gleichermaßen für die Ausführungsformen des erfindungsgemäßen Verfahrens. Auch kann es sein, dass diverse Ausführungsformen des erfindungsgemäßen Verfahrens mittels einer Ausführungsform der erfindungsgemäßen Vorrichtung umgesetzt oder durchgeführt werden.

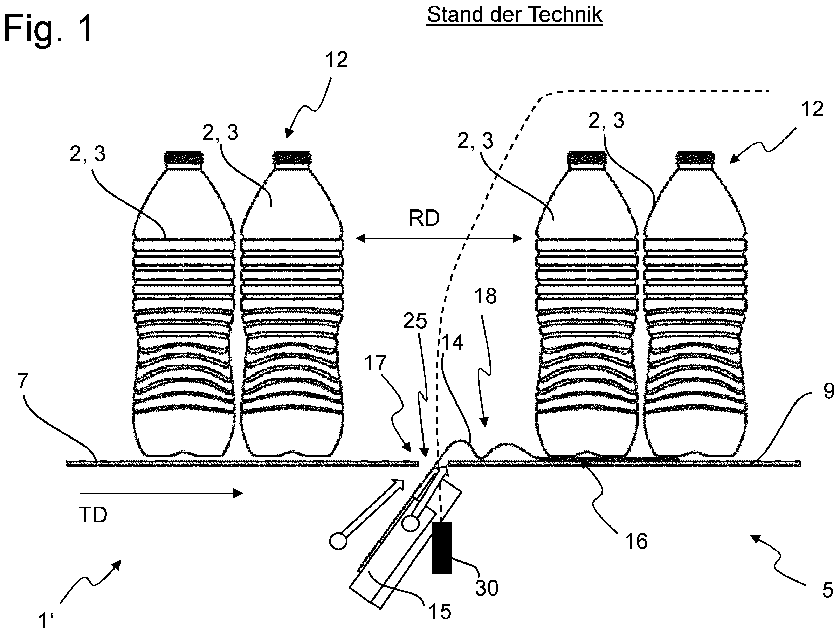

Die Fig. 1 zeigt eine schematische Ansicht einer bereits aus dem Stand der Technik bekannten Vorrichtung 1' und verdeutlicht eine Vorgehensweise bei einem bereits aus dem Stand der Technik bekannten Verfahren zum Verpacken von Artikeln 2. Artikel 2, welche vorliegend durch Getränkeflaschen 3 ausgebildet sind, werden im Handel regelmäßig als sogenanntes Gebinde verkauft, bei denen jeweils mehrere Artikel 2 über ein Verpackungsmittel zusammengefasst sind und über das Verpackungsmittel aneinandergehalten werden. So sind beispielsweise Sechsergebinde bzw. Sixpacks als Verkaufseinheit bekannt, welche genau sechs Artikel 2 umfassen, die über ein entsprechendes Verpackungsmittel aneinandergehalten sind. Auch Zweiergebinde oder Gebinde, welche mehr als sechs Artikel 2 umfassen, können als Verkaufseinheit vorgesehen sein.

Um ein Gebinde mit mehreren Artikeln 2 herstellen zu können, werden die für ein jeweiliges Gebinde vorgesehenen Artikel 2 zunächst zu einer Artikelgruppe 12 zusammengefasst, die über eine entsprechende Anzahl an Artikeln 2 verfügt. Hierzu finden Einteiler Verwendung, welche die für ein jeweiliges Gebinde vorgesehenen Artikel 2 gegenüber nachfolgenden Artikeln 2 kurzzeitig beschleunigen, wodurch die vorauseilenden Artikel 2 gegenüber nacheilenden Artikeln 2 beabstandet werden und eine Artikelgruppe 12 entsteht.

Zwei solcher Artikelgruppen 12 sind in Fig. 1 bereits zu erkennen. Die Artikelgruppen 12 werden über die Horizontalfördereinrichtung 5 in Transportrichtung TD bewegt, wobei die Horizontalfördereinrichtung 5 vorliegend durch eine erste Transporteinrichtung 7 und eine zweite Transporteinrichtung 9 gebildet wird. Wie es Fig. 1 ebenso erkennen lässt, ist zwischen der ersten Transporteinrichtung 7 und der zweiten Transporteinrichtung 9 ein Spalt 25 ausgebildet.

Die Zuführeinrichtung 15 bringt Zuschnitte aus Verpackungsfolie 14 in einen Transportweg der Artikelgruppen 12 ein, so dass eine jeweilige Artikelgruppe 12 auf einen Abschnitt 16 eines jeweiligen Zuschnittes aus Verpackungsfolie 14 auffährt. Die in Fig. 1 rechtsseitig dargestellte Artikelgruppe 12 ist bereits auf den Abschnitt 16 des Zuschnittes aus Verpackungsfolie 14 aufgefahren. Ein frei verbleibender Abschnitt 17 des Zuschnittes aus Verpackungsfolie 14 wird noch über die Zuführeinrichtung 15 in den Transportweg der Artikelgruppe 12 eingebracht. Bereits aus dem Stand der Technik bekannte Vorrichtungen 1' gemäß Fig. 1 umfassen zudem mehrere umlaufend bewegte Einschlagstäbe 30, welche den frei verbleibenden Abschnitt 17 eines jeweiligen Zuschnittes aus Verpackungsfolie 14 aufnehmen und um die jeweilige Artikelgruppe 12 legen, wie dies durch die gestrichelte Linie angedeutet wird.

Auf den bis dahin frei verbleibenden Abschnitt 17, welcher bereits um die Artikelgruppe 12 gelegt worden ist, fährt die Artikelgruppe 12 erneut auf, so dass der jeweilige Zuschnitt aus Verpackungsfolie 14 eine jeweilige Artikelgruppe 12 vollständig umschließt. Hierauf folgend kann die Artikelgruppe 12 zusammen mit dem Zuschnitt aus Verpackungsfolie 14 in einen Schrumpftunnel einfahren, wodurch der jeweilige Zuschnitt aus Verpackungsfolie 14 auf die jeweiligen Artikel 2 der jeweiligen Artikelgruppe 12 aufgeschrumpft wird und ein Gebinde aus der jeweiligen Artikelgruppe 12 und dem aufgeschrumpften Zuschnitt aus Verpackungsfolie 14 gebildet ist.

Wie es Fig. 1 erkennen lässt, ist zwischen einzelnen Artikelgruppen 12, die in Transportrichtung TD aufeinanderfolgen, ein bestimmter relativer Abstand RD ausgebildet. Dieser relative Abstand RD ist notwendig, damit die in Fig. 1 linksseitig dargestellte Artikelgruppe 12 nicht ungewollt auf den noch frei verbleibenden Abschnitt 17 des Zuschnittes aus Verpackungsfolie 14 auffährt, mit welchem die in Fig. 1 dargestellte rechtsseitige Artikelgruppe 12 bereits bodenseitig in Kontakt steht. Um eine Vorrichtung 1' mit hohem Durchsatz betreiben zu können, wäre es jedoch wünschenswert, wenn der relative Abstand RD aufeinanderfolgender Artikelgruppen 12 reduziert werden kann, um eine größere Anzahl an Artikelgruppen 12 je Zeiteinheit mit Verpackungsfolie versehen zu können.

Wie es bereits in Fig. 1 gezeigt ist, kann es bei aus dem Stand der Technik bekannten Vorrichtungen 1' daher bereits sein, dass die Zuführeinrichtung 15 mit hoher Fördergeschwindigkeit betrieben wird, wodurch sich auf der zweiten Transporteinrichtung 9 ein Foliensack 18 bildet. Da sich hierdurch das Material des Zuschnittes aus Verpackungsfolie 14 auf der zweiten Transporteinrichtung 9 sammelt, kann der relative Abstand RD für aufeinanderfolgende Artikelgruppen 12 bereits bis zu einem gewissen Ausmaß verkleinert werden, ohne dass die in Fig. 1 linksseitig dargestellte Artikelgruppe 12 ungewollt auf den Zuschnitt aus Verpackungsfolie 14 auffährt, welcher für die in Fig. 1 rechtsseitig dargestellte Artikelgruppe 12 vorgesehen ist.

Das Bilden eines solchen Foliensackes 18 ist häufig nicht ausreichend, um mit Gewissheit ausschließen zu können, dass eine nachfolgende Artikelgruppe 12 nicht ungewollt auf den flächigen Zuschnitt 14 auffährt. Zudem wäre es wünschenswert, wenn der relative Abstand RD aufeinanderfolgender Artikelgruppen 12 weiter reduziert werden kann, um den Durchsatz der Vorrichtung 1' erhöhen zu können. Auch führt ein entsprechender Foliensack 18 gelegentlich zu Problemen, wenn der frei verbleibende Abschnitt 17 des Zuschnittes aus Verpackungsfolie 14 von einem Einschlagstab 30 (vgl.

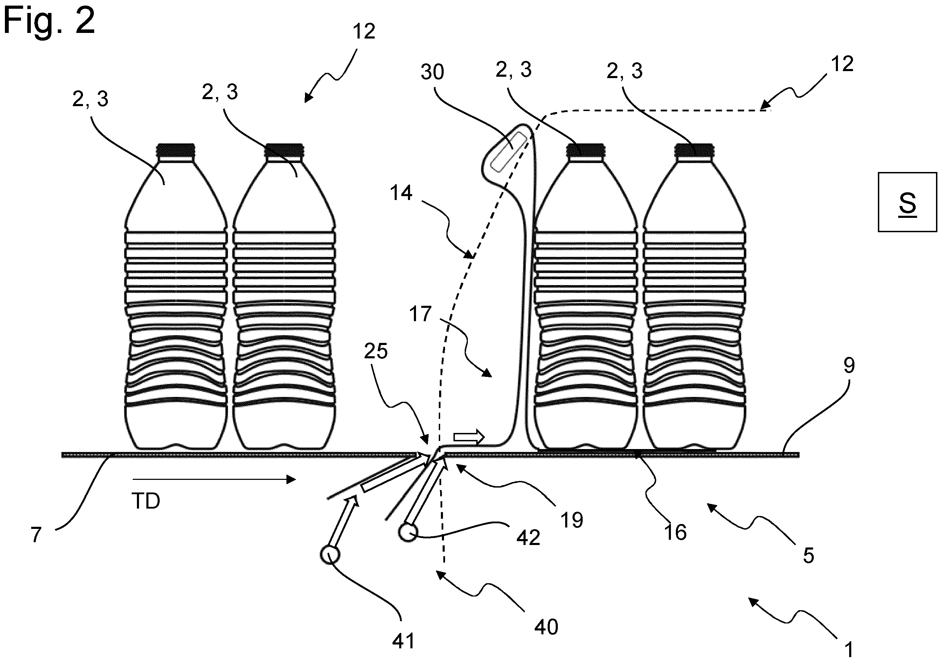

Fig. 2) entgegengenommen wird.

Mittels der Ausführungsform der in Fig. 2 dargestellten erfindungsgemäßen Vorrichtung 1 besteht die Möglichkeit, den Durchsatz zu erhöhen und den relativen Abstand RD, mit dem aufeinanderfolgende Artikelgruppen 12 entlang der Transportrichtung TD bewegt werden, weiter zu reduzieren.

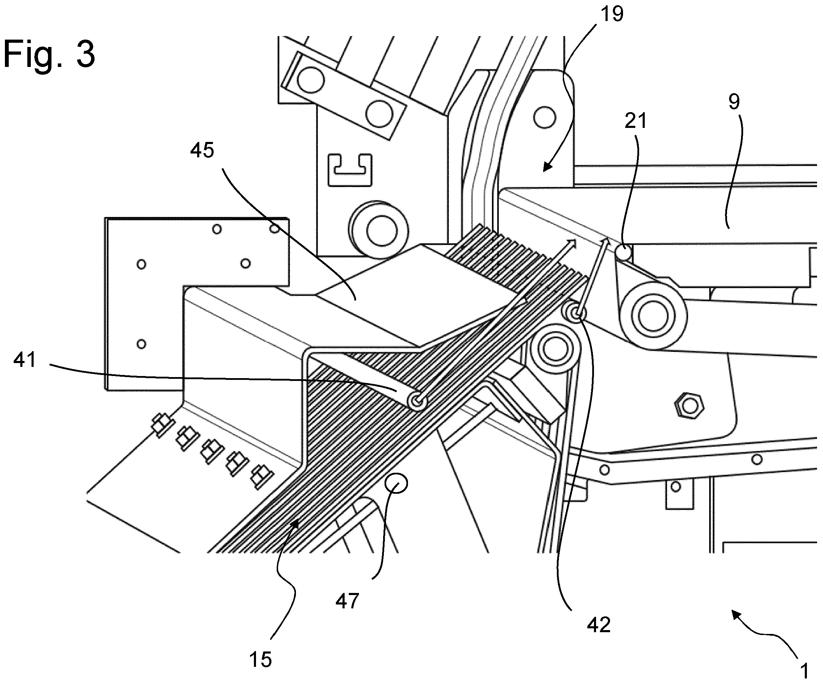

Die in Fig. 2 dargestellte Ausführungsform einer erfindungsgemäßen Vorrichtung 1 umfasst ebenso eine Horizontalfördereinrichtung 5, die eine erste Transporteinrichtung 7 und eine zweite Transporteinrichtung 9 umfasst. Über eine in Fig. 2 aus Gründen der Übersichtlichkeit nicht mit dargestellte Zuführeinrichtung 15 (vgl. Fig. 3) werden Zuschnitte aus Verpackungsfolie 14 in einen Transportweg der Artikelgruppen 12 eingebracht. Hierzu ist zwischen der ersten Transporteinrichtung 7 und der zweiten Transporteinrichtung 9 ein Spalt 25 ausgebildet. Auf eine Transportrichtung der Horizontalfördereinrichtung 5 wird in Fig. 2 weiterhin mit TD verwiesen. Die in Fig. 2 rechtsseitig dargestellte Artikelgruppe 12 ist bereits auf einen Abschnitt 16 des Zuschnittes aus Verpackungsfolie 14 aufgefahren.

Zudem hat in Fig. 2 bereits ein umlaufend angetriebener bzw. ein umlaufend bewegter Einschlagstab 30 den frei verbleibenden Abschnitt 17 des Zuschnittes an Verpackungsfolie 14 entgegengenommen, so dass der frei verbleibende Abschnitt 17 bei der Position des Einschlagstabes 30 nach Fig. 2 vom Einschlagstab 30 hängend getragen wird. In Fig. 2 ist lediglich ein Einschlagstab 30 gezeigt. Es sind jedoch eine Vielzahl an umlaufend bewegten Einschlagstäben 30 vorgesehen, wobei jeweils genau ein Einschlagstab 30 einen jeweiligen frei verbleibenden Abschnitt 17 eines jeweiligen Zuschnittes aus Verpackungsfolie 14 gemäß der Darstellung nach Fig. 2 aufnimmt und sodann um die jeweilige Artikelgruppe 12 führt.

Gegenüber der aus dem Stand der Technik bereits bekannten Vorrichtung 1', wie sie in Fig. 1 gezeigt ist, unterscheidet sich die Vorrichtung 1 des Ausführungsbeispiel nach Fig. 2 durch die Strömungserzeugungseinrichtung 40, welche unterhalb einer durch die Horizontalfördereinrichtung 5 ausgebildeten Transportebene für Artikelgruppen 12 angeordnet ist.

Vorliegend umfasst die Strömungserzeugungseinrichtung 40 mindestens eine erste Düse 41 und mindestens eine zweite Düse 42, die jeweils zur Abgabe eines Luftvolumenstromes ausgebildet sind. Die Hauptströmungsrichtung des jeweiligen abgegebenen Luftvolumenstromes wird in Fig. 2 mittels Pfeildarstellung angedeutet. Weiter wird auf einen Endbereich der zweiten Transporteinrichtung 9 mit Bezugsziffer 19 verwiesen. Der über die mindestens eine erste Düse abgegebene Luftvolumenstrom ist mit seiner Hauptströmungsrichtung auf diesen Endbereich der zweiten Transporteinrichtung 9 gerichtet, wodurch sich der Luftvolumenstrom entlang einer Oberfläche der zweiten Transporteinrichtung 9 bewegt und den frei verbleibenden Abschnitt 17 des Zuschnittes aus Verpackungsfolie 14 gegenüber der Oberfläche der zweiten Transporteinrichtung 9 zumindest teilweise anhebt.

Auf einer Oberfläche der zweiten Transporteinrichtung 9 bildet sich somit ein Luftbett aus, auf dem sich der frei verbleibende Abschnitt 17 des Zuschnittes aus Verpackungsfolie 14 befindet. Der über die mindestens eine zweite Düse 42 abgegebene Luftvolumenstrom wird zudem derart von der mindestens einen zweiten Düse 42 abgegeben, dass dieser Luftvolumenstrom mit einer unteren Breitseitenfläche des frei verbleibenden Abschnittes 17 in Kontakt tritt.

Unter Berücksichtigung des Luftvolumenstromes, welcher über die mindestens eine erste Düse 41 abgegeben wird, ist in Fig. 2 zu erkennen, dass dieser mittels der mindestens einen ersten Düse 41 gegen ein Strömungsleitblech 45 geführt wird. Das Strömungsleitblech 45 ist derart ausgebildet und angeordnet, dass der über die mindestens eine erste Düse 41 abgegebene Luftvolumenstrom umgelenkt wird, wodurch der Luftvolumenstrom nach entsprechender Umlenkung mit seiner Hauptströmungsrichtung gegen den Endbereich 19 der zweiten Transporteinrichtung 9 gerichtet ist. Der über die mindestens eine erste Düse 41 abgegebene Luftvolumenstrom tritt hierbei mit einer oberen Breitseitenfläche des frei verbleibenden Abschnittes 17 in Kontakt und folgt ebenso dem Verlauf einer Oberfläche der zweiten Transporteinrichtung 9, nachdem er mit dem Endbereich 19 der zweiten Transporteinrichtung 9 in Kontakt getreten ist.

Die Fig. 2 lässt hierbei erkennen, dass der frei verbleibende Abschnitt 17 hierbei gegen die Artikelgruppe 12 geblasen wird. Eine Reichweite des frei verbleibenden Abschnittes 17 in Richtung der in Fig. 2 linksseitig dargestellten Artikelgruppe 12 wird hierdurch verkürzt, womit verhindert werden kann, dass die linksseitig dargestellte Artikelgruppe 12 ungewollt auf den frei verbleibenden Abschnitt 17 des Zuschnittes aus Verpackungsfolie 14 auffährt. Zudem wird hierdurch die Möglichkeit bereitgestellt, den relativen Abstand RD (vgl. Fig. 1) zwischen aufeinanderfolgenden Artikelgruppen 12 zu verkürzen, so dass verhältnismäßig mehr Artikelgruppen 12 je Zeiteinheit entlang der Horizontalfördereinrichtung 5 bewegt werden können und der Durchsatz der Vorrichtung 1 beim Aufbringen von Verpackungsfolie auf Artikelgruppen 12 hierdurch erhöht wird.

Die mindestens eine erste Düse 41 und/oder die mindestens eine zweite Düse 42 können jeweils über ein Rohr bereitgestellt werden, welches zur Ausgabe mindestens eines Luftvolumenstromes eine oder mehrere Öffnungen besitzt. Insbesondere kann das Rohr eine solche Anzahl an Öffnungen besitzen, dass der frei verbleibende Abschnitt 17 des Zuschnittes aus Verpackungsfolie 14 zumindest näherungsweise über seine gesamte Breite mit Strömungsluft bzw. mit einem Luftvolumenstrom beaufschlagbar ist. Darüber hinaus sind weitere Ausführungsformen vorstellbar, bei denen die mindestens eine erste Düse und/oder die mindestens eine zweite Düse nicht durch ein Rohr bereitgestellt werden, sondern beispielsweise durch eine leisten- oder trichterförmige Konstruktion. Solche Düsen sind aus dem Stand der Technik bekannt und werden daher nicht abschließend aufgezählt.

Vorliegend steht die Strömungserzeugungseinrichtung 40 zudem mit einer Steuereinrichtung S in Verbindung. Wenn die in Fig. 2 linksseitig dargestellte Artikelgruppe 12 auf einen weiteren Zuschnitt aus Verpackungsfolie auffährt, ist es zunächst nicht notwendig oder sinnvoll, wenn ein jeweiliger Luftvolumenstrom über die Düsen 41 und 42 abgegeben wird. Die Steuerungseinrichtung S ist somit in der Lage, die Strömungserzeugungseinrichtung 40 derart anzusteuern, dass die Strömungserzeugungseinrichtung 40 intermittierend und hierbei lediglich zu vorgegebenen Zeitpunkten einen jeweiligen Luftvolumenstrom erzeugt. Hierzu berücksichtigt die Steuerungseinrichtung S eine Transportgeschwindigkeit der Horizontalfördereinrichtung 5.

Die Fig. 3 zeigt eine perspektivische Ansicht einer weiteren Ausführungsform einer erfindungsgemäßen Vorrichtung 1 und verdeutlicht Schritte, wie sie in weiteren Ausführungsformen des erfindungsgemäßen Verfahrens vorgesehen sein können. Die Ausführungsform einer erfindungsgemäßen Vorrichtung 1 nach Fig. 3 umfasst weiterhin eine Horizontalfördereinrichtung mit einer ersten und einer zweiten Transporteinrichtung, wobei aus Gründen der Übersichtlichkeit vorliegend lediglich die zweite Transporteinrichtung 9 dargestellt ist. Die zweite Transporteinrichtung 9 besitzt eine Umlenkung 21, die zylinderförmig ausgebildet ist und ein Fördermittel der zweiten Transporteinrichtung 9 umlenkt, wonach das Fördermittel horizontal orientiert ist und als Obertrum bzw. als Zugtrum verläuft. Die als Bestandteil der Vorrichtung 1 nach Fig. 3 ausgebildeten Einschlagstäbe 30 sind aus Gründen der Übersichtlichkeit ebenso nicht mit dargestellt.

Bestandteil der Vorrichtung 1 ist eine Zuführeinrichtung 15, über welche Zuführeinrichtung 15 Zuschnitte aus Verpackungsfolie 14 (vgl. Fig. 2) über den Spalt 25 in den Transportweg von Artikelgruppen 12 eingebracht werden können. Wie es in Fig. 3 lediglich schematisch dargestellt ist, umfasst die Zuführeinrichtung 15 eine Lenkungseinrichtung 47. Die Lenkungseinrichtung 47 ist zur Führung von Zuschnitten aus Verpackungsfolie 14 vorgesehen und umfasst eine zumindest abschnittsweise gewölbte und mit Strömungsluft überstrichene Oberfläche. Entlang der Lenkungseinrichtung 47 bzw. entlang ihrer zumindest abschnittsweise gewölbten und mit Strömungsluft überstrichenen Oberfläche wird ein jeweiliger Zuschnitt aus Verpackungsfolie 14 bewegt, bevor er die Strömungseinrichtung 40 erreicht. Die Strömungseinrichtung 40 umfasst mindestens eine erste Düse 41 und mindestens eine zweite Düse 42.

Die mindestens eine erste Düse 41 und die mindestens eine zweite Düse 42 werden jeweils durch ein Rohr ausgebildet, das eine oder mehrere Öffnungen besitzen kann, um jeweils mindestens einen Luftvolumenstrom abzugeben. Die Hauptströmungsrichtung des jeweiligen Luftvolumenstroms ist auch in Fig. 3 mittels Pfeildarstellung angedeutet. So wird ein Luftvolumenstrom über die zweite Düse 42 derart abgegeben, dass die Hauptströmungsrichtung des Luftvolumenstroms gegen die im Endbereich 19 der zweiten Transporteinrichtung 9 angeordnete Umlenkung 21 gerichtet ist. Der über die mindestens eine erste Düse 41 abgegebene Luftvolumenstrom ist zunächst gegen das Strömungsleitblech 45 gerichtet, welches den Luftvolumenstrom derart führt, dass seine Hauptströmungsrichtung nach Kontakt mit dem Strömungsleitblech 45 ebenso gegen die Umlenkung 21 gerichtet ist.

Die mit dem Ausführungsbeispiel nach Fig. 2 einhergehenden Vorteile und technischen Effekte sind auch bei dem Ausführungsbeispiel nach Fig. 3 vorhanden. So bewegt sich ein mit einer Hauptströmungsrichtung gegen den Endbereich 19 bzw. gegen die Umlenkung 21 gerichteter Luftvolumenstrom hierauf entlang einer Oberfläche der zweiten Transporteinrichtung 9. Hierdurch wird ein frei verbleibender Abschnitt 17 des Zuschnittes aus Verpackungsfolie 14 gegen eine Artikelgruppe 12 geblasen, wodurch die Reichweite des frei verbleibenden Abschnittes 17 in Richtung einer nacheilenden Artikelgruppe 12 verkürzt werden kann und die Möglichkeit besteht, Artikelgruppen 12 mit geringem relativen Abstand RD (vgl. Fig. 1) zu bewegen und hierdurch den Durchsatz für die Vorrichtung 1 bei einem Aufbringen von Verpackungsfolie auf Artikelgruppen 12 zu erhöhen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 1': Vorrichtung (Stand der Technik)
- 2: Artikel
- 3: Getränkeflasche
- 5: Horizontalfördereinrichtung
- 7: Erste Transporteinrichtung
- 9: Zweite Transporteinrichtung
- 12: Artikelgruppe
- 14: Zuschnitt aus Verpackungsfolie
- 15: Zuführeinrichtung
- 16: Abschnitt
- 17: Frei verbleibender Abschnitt
- 18: Foliensack
- 19: Endbereich der zweiten Transporteinrichtung 9
- 21: Umlenkung
- 25: Spalt
- 30: Einschlagstab
- 40: Strömungserzeugungseinrichtung
- 41: Erste Düse
- 42: Zweite Düse
- 45: Strömungsleitblech
- 47: Lenkungseinrichtung

- RD: Relativer Abstand
- TD: Transportrichtung

## Patentansprüche

1. Vorrichtung (1) zum Aufbringen von Verpackungsfolie auf Artikelgruppen (12), umfassend
- mindestens eine Horizontalfördereinrichtung (5) zum Transport von Artikelgruppen (12),
- eine Zuführeinrichtung (15), welche zum Einbringen von Zuschnitten aus Verpackungsfolie (14) in einen Transportweg der über die mindestens eine Horizontalfördereinrichtung (5) transportierten Artikelgruppen (12) ausgebildet ist, so dass eine jeweilige Artikelgruppe (12) auf einen Abschnitt (16) eines jeweiligen in den Transportweg eingebrachten Zuschnittes aus Verpackungsfolie (14) auffährt und ein weiterer Abschnitt (17) des jeweiligen Zuschnittes aus Verpackungsfolie (14) frei verbleibt und
- mehrere Einschlagstäbe (30), die derart umlaufend bewegt sind, dass sie einen jeweiligen frei verbleibenden Abschnitt (17) des jeweiligen Zuschnittes aus Verpackungsfolie (14) aufnehmen und um die jeweilige Artikelgruppe (12) führen, die Vorrichtung (1) **gekennzeichnet durch**
- eine Strömungserzeugungseinrichtung (40), ausgebildet zur Erzeugung mindestens eines Luftvolumenstroms, über den ein jeweiliger frei verbleibender und hierbei bereits von einem jeweiligen Einschlagstab (30) aufgenommener Abschnitt (17) des jeweiligen Zuschnittes aus Verpackungsfolie (14) zur jeweiligen Artikelgruppe (12) geblasen werden kann.

2. Vorrichtung (1) nach Anspruch 1, bei der
- die mindestens eine Horizontalfördereinrichtung (5) eine erste Transporteinrichtung (7) und eine zweite Transporteinrichtung (9) umfasst, wobei die zweite Transporteinrichtung (9) entlang einer Transportrichtung (TD) der Artikelgruppen (12) auf die erste Transporteinrichtung (7) folgt und wobei zwischen der ersten Transporteinrichtung (7) und der zweiten Transporteinrichtung (9) ein Spalt (25) ausgebildet ist, über welchen mittels der Zuführeinrichtung (15) Zuschnitte aus Verpackungsfolie (14) in den Transportweg der Artikelgruppen (12) einbringbar sind und wobei
- die Strömungserzeugungseinrichtung (40) wenigstens eine Düse (41, 42) besitzt, über die mindestens ein Luftvolumenstrom derart abgebbar ist, dass der mindestens eine Luftvolumenstrom mit seiner Hauptströmungsrichtung auf einen im Bereich des Spaltes (25) angeordneten Endbereich (19) der zweiten Transporteinrichtung (9) gerichtet ist.

3. Vorrichtung (1) nach Anspruch 1 oder Anspruch 2, bei der die mindestens eine Horizontalfördereinrichtung (5) eine erste Transporteinrichtung (7) und eine zweite Transporteinrichtung (9) umfasst, wobei die zweite Transporteinrichtung (9) entlang einer Transportrichtung (TD) der Artikelgruppen (12) auf die erste Transporteinrichtung (7) folgt und wobei zwischen der ersten Transporteinrichtung (7) und der zweiten Transporteinrichtung (9) ein Spalt (25) ausgebildet ist, über welchen mittels der Zuführeinrichtung (15) Zuschnitte aus Verpackungsfolie (14) in den Transportweg der Artikelgruppen (12) einbringbar sind und wobei die Strömungserzeugungseinrichtung (40) mindestens eine erste Düse (41) und mindestens eine zweite Düse (42) besitzt, über die jeweils mindestens ein Luftvolumenstrom derart abgebbar ist, dass
- der jeweilige mindestens eine Luftvolumenstrom mit seiner jeweiligen Hauptströmungsrichtung auf einen im Bereich des Spaltes (25) angeordneten Endbereich (19) der zweiten Transporteinrichtung (9) gerichtet ist und wobei
- der über die mindestens eine erste Düse (41) abgegebene mindestens eine Luftvolumenstrom auf eine erste Breitseitenfläche des frei verbleibenden und hierbei bereits von einem jeweiligen Einschlagstab (30) aufgenommenen Abschnittes (17) des jeweiligen Zuschnittes aus Verpackungsfolie (14) trifft und der über die mindestens eine zweite Düse (42) abgegebene mindestens eine Luftvolumenstrom auf eine zweite Breitseitenfläche des frei verbleibenden und hierbei bereits von einem jeweiligen Einschlagstab (30) aufgenommenen Abschnittes (17) des jeweiligen Zuschnittes aus Verpackungsfolie (14) trifft, welche zweite Breitseitenfläche der ersten Breitseitenfläche gegenüberliegt.

4. Vorrichtung (1) nach Anspruch 3, bei welcher die Strömungserzeugungseinrichtung (40) ein erstes Rohr umfasst, welches die mindestens eine erste Düse (41) ausbildet und/oder bei welcher die Strömungserzeugungseinrichtung (40) ein zweites Rohr umfasst, welches die mindestens eine zweite Düse (42) ausbildet.

5. Vorrichtung nach Anspruch 3 oder Anspruch 4, bei welcher die Strömungserzeugungseinrichtung (40) wenigstens ein Strömungsleitblech (45) umfasst, welches derart angeordnet ist, dass der über die mindestens eine erste Düse (41) abgegebene Luftvolumenstrom über das wenigstens eine Strömungsleitblech (45) umgelenkt wird, so dass der über die mindestens eine erste Düse (41) abgegebene Luftvolumenstrom mit seiner Hauptströmungsrichtung auf den im Bereich des Spaltes (25) angeordneten Endbereich (19) der zweiten Transporteinrichtung (9) gerichtet ist und auf die zweite Breitseitenfläche des frei verbleibenden und hierbei bereits von einem jeweiligen Einschlagstab (30) aufgenommenen Abschnittes (17) des jeweiligen Zuschnittes aus Verpackungsfolie (14) trifft.

6. Vorrichtung nach einem der Ansprüche 1 bis 5, bei welcher die Zuführeinrichtung (15) eine Lenkungseinrichtung (47) zur Führung von Zuschnitten aus Verpackungsfolie (14) umfasst, welche Lenkungseinrichtung (47) eine zumindest abschnittsweise gewölbte und mit Strömungsluft überstrichene Oberfläche ausbildet und entlang welcher Lenkungseinrichtung (47) ein jeweiliger Zuschnitt aus Verpackungsfolie (14) bewegt wird, bevor er die Strömungserzeugungseinrichtung (40) erreicht.

7. Vorrichtung nach einem der Ansprüche 1 bis 6, umfassend eine Steuereinrichtung (S), über welche die Strömungserzeugungseinrichtung (40) zum intermittierenden Erzeugen des mindestens einen Luftvolumenstromes ansteuerbar ist.

8. Verwendung einer Vorrichtung (1) nach einem der Ansprüche 1 bis 7 zum Aufbringen von Verpackungsfolie auf Artikelgruppen (12), bei welcher Verpackungsfolie es sich um eine thermoplastische Verpackungsfolie handelt.

9. Verfahren zum Aufbringen von Verpackungsfolie auf Artikelgruppen (12), bei welchem Verfahren Artikelgruppen (12) über mindestens eine Horizontalfördereinrichtung (5) bewegt werden und eine Zuführeinrichtung (15) Zuschnitte aus Verpackungsfolie (14) in einen Transportweg der Artikelgruppen (12) einbringt, so dass eine jeweilige Artikelgruppe (12) auf einen Abschnitt (16) eines jeweiligen in den Transportweg eingebrachten Zuschnittes aus Verpackungsfolie (14) auffährt und ein weiterer Abschnitt (17) des jeweiligen Zuschnittes aus Verpackungsfolie (14) frei verbleibt und wobei mehrere Einschlagstäbe (30) vorgesehen sind, von denen ein jeweiliger Einschlagstab (30) einen jeweiligen frei verbleibenden Abschnitt (17) eines jeweiligen Zuschnittes aus Verpackungsfolie (14) entgegennimmt und um die jeweilige Artikelgruppe (12) führt, das Verfahren **dadurch gekennzeichnet, dass** ein jeweiliger frei verbleibender und hierbei bereits von einem jeweiligen Einschlagstab (30) aufgenommener Abschnitt (17) des jeweiligen Zuschnittes aus Verpackungsfolie (14) mittels mindestens eines durch eine Strömungserzeugungseinrichtung (40) bereitgestellten Luftvolumenstromes zur jeweiligen Artikelgruppe (12) geblasen wird.

10. Verfahren nach Anspruch 9, bei welchem die mindestens eine Horizontalfördereinrichtung (5) eine erste Transporteinrichtung (7) und eine zweite Transporteinrichtung (9) besitzt, wobei die zweite Transporteinrichtung (9) entlang einer Transportrichtung (TD) der Artikelgruppen (12) auf die erste Transporteinrichtung (7) folgt und wobei zwischen der ersten Transporteinrichtung (7) und der zweiten Transporteinrichtung (9) ein Spalt (25) ausgebildet ist, über welchen mittels der Zuführeinrichtung (15) Zuschnitte aus Verpackungsfolie (14) in den Transportweg der Artikelgruppen (12) eingebracht werden und wobei über wenigstens eine Düse (41, 42) der Strömungserzeugungseinrichtung (40) mindestens ein Luftvolumenstrom derart abgegeben wird, dass der mindestens eine Luftvolumenstrom mit seiner Hauptströmungsrichtung auf einen im Bereich des Spaltes (25) angeordneten Endbereich (19) der zweiten Transporteinrichtung (9) gerichtet wird.

11. Verfahren nach Anspruch 9 oder Anspruch 10, bei welchem die mindestens eine Horizontalfördereinrichtung (5) eine erste Transporteinrichtung (7) und eine zweite Transporteinrichtung (9) besitzt, wobei die zweite Transporteinrichtung (9) entlang einer Transportrichtung (TD) der Artikelgruppen (12) auf die erste Transporteinrichtung (7) folgt und wobei zwischen der ersten Transporteinrichtung (7) und der zweiten Transporteinrichtung (9) ein Spalt (25) ausgebildet ist, über welchen mittels der Zuführeinrichtung (15) Zuschnitte aus Verpackungsfolie (14) in den Transportweg der Artikelgruppen (12) eingebracht werden und wobei die Strömungserzeugungseinrichtung (40) mindestens eine erste Düse (41) und mindestens eine zweite Düse (42) besitzt, über die jeweils mindestens ein Luftvolumenstrom derart abgegeben wird, dass
- der jeweilige mindestens eine Luftvolumenstrom mit seiner jeweiligen Hauptströmungsrichtung auf einen im Bereich des Spaltes (25) angeordneten Endbereich (19) der zweiten Transporteinrichtung (9) gerichtet wird und
- der über die erste Düse (41) abgegebene mindestens eine Luftvolumenstrom auf eine erste Breitseitenfläche des frei verbleibenden und hierbei bereits von einem jeweiligen Einschlagstab (30) aufgenommenen Abschnittes (17) des jeweiligen Zuschnittes aus Verpackungsfolie (14) trifft und der über die mindestens eine zweite Düse (42) abgegebene Luftvolumenstrom auf eine zweite Breitseitenfläche des frei verbleibenden und hierbei bereits von einem jeweiligen Einschlagstab (30) aufgenommenen Abschnittes (17) des jeweiligen Zuschnittes aus Verpackungsfolie (14) trifft, welche zweite Breitseitenfläche der ersten Breitseitenfläche gegenüberliegt.

12. Verfahren nach Anspruch 11, bei dem die Strömungserzeugungseinrichtung (40) wenigsten sein Strömungsleitblech (45) besitzt, über das der über die mindestens eine erste Düse (41) abgegebene Luftvolumenstrom umgelenkt wird, so dass der über die mindestens eine erste Düse (41) abgegebene Luftvolumenstrom mit seiner Hauptströmungsrichtung auf den im Bereich des Spaltes (25) angeordneten Endbereich (19) der zweiten Transporteinrichtung (9) gerichtet ist und auf die zweite Breitseitenfläche des frei verbleibenden und hierbei bereits von einem jeweiligen Einschlagstab (30) aufgenommenen Abschnittes (17) des jeweiligen Zuschnittes aus Verpackungsfolie (14) trifft.

13. Verfahren nach einem der Ansprüche 9 bis 12, bei dem die Zuführeinrichtung (15) eine Lenkungseinrichtung (47) zur Führung von Zuschnitten aus Verpackungsfolie (14) umfasst, welche Lenkungseinrichtung (47) eine zumindest abschnittsweise gewölbte und mit Strömungsluft überstrichene Oberfläche ausbildet und entlang welcher Lenkungseinrichtung (47) sich ein jeweiliger Zuschnitt aus Verpackungsfolie (14) bewegt, bevor er die Strömungserzeugungseinrichtung (40) erreicht.
